# EUROPÄISCHE PATENTSCHRIFT

(11) **EP 0 517 671 B1**
(45) Veröffentlichungstag und Bekanntmachung des Hinweises auf die Patenterteilung: **30.08.1995**
(21) Anmeldenummer: 92810425.6
(22) Anmeldetag: 03.06.1992
(51) Int. Cl.: F16B 25/00, F16B 35/04, F16B 25/10, E04D 5/14, B29C 45/37, B29C 33/30

(54) **Befestigungsvorrichtung**
Fastening device
Dispositif de fixation

(30) Priorität: 04.06.1991 CH 1653/91
(43) Veröffentlichungstag der Anmeldung: 09.12.1992
(73) Patentinhaber: ISOLINK INC., Nassau (BS)
(72) Erfinder: Schmid, Paul M., Camarillo CA 93010 (US)
(74) Vertreter: Eschmann, Heinz

(56) Entgegenhaltungen:
- EP-A- 0 297 196
- WO-A-91/07599
- FR-A- 2 382 608
- GB-A- 997 733
- US-A- 2 207 897
- US-A- 4 621 963

## Beschreibung

Die Erfindung betrifft eine Vorrichtung zur lösbaren Befestigung eines Bauteils an einem Material geringer Eigenfestigkeit, gemäss dem Oberbegriff des unabhängigen Patentanspruchs 1.

Durch die WO-A-9 107 599 ist ein zum Anbringen von Bauelementen an Wandverkleidungen dienendes Befestigungselement bekannt, mittels welchem Bauelemente an einem Werkstoff geringer Eigenfestigkeit, z.B. Hartschaum, lösbar angebracht werden können. Dieses Befestigungselement weist einen ein Aussengewinde tragenden kegelförmigen Grundkörper auf und ist einerseits mit einer gewindefreien Spitze, andererseits mit einem Anschlagbund versehen. An letzterem ist ein Haltekopf angeformt, welcher Mittel zur lösbaren Halterung von Gegenständen trägt.

Es ist die Aufgabe der vorliegenden Erfindung, diese bekannte Vorrichtung dahingehend zu verbessern, dass sie sich nicht nur für Wandverkleidungen, sondern für alle möglichen Anwendungen einsetzen lässt, wo ein Bauteil lösbar an einem Material geringer Eigenfestigkeit befestigt werden soll. Dabei ist von besonderer Bedeutung, dass sich die neue Vorrichtung auch in Materialien grosser Dicke mühelos, das heisst von Hand unter Verwendung eines üblichen Werkzeuges einschrauben und bei Bedarf auch wieder entfernen lässt.

Die erfindungsgemässe Vorrichtung ist im kennzeichnenden Teil des unabhängigen Patentanspruchs 1 definiert. Bevorzugte Ausführungsformen ergeben sich aus den abhängigen Patentansprüchen.

Die Erfindung betrifft des weiteren ein Herstellungsverfahren für die genannte Vorrichtung sowie eine spezielle Anwendung dieser Vorrichtung.

Unter Materialien geringer Eigenfestigkeit werden alle diejenigen Werkstoffe verstanden, die - wie z.B. der aus Polyurethan gefertigte Hartschaum - im Vergleich zu Holz einem spitzen Gegenstand einen erheblich geringeren Eindringwiderstand entgegensetzen, aber doch genügend Eigenfestigkeit besitzen, um beispielsweise eine mit Spitzgewinde ausgerüstete Schraube auch bei grösserer axialer Zugbelastung festzuhalten. Diese Werkstoffe werden vielfach zur isolierenden Auskleidung von Kühlräumen, Wohnräumen etc. verwendet.

Eine bevorzugte Anwendung findet die erfindungsgemässe Vorrichtung bei der Befestigung wasserdichter Abdeckfolien auf dem Isoliermaterial von Dächern, wo die Dicke des Isoliermaterials ein Vielfaches derjenigen der Abdeckfolie trägt und die Vorrichtung unverhältnismässig tief eingeschraubt werden muss.

Die erfindungsgemässe Vorrichtung besteht vorzugsweise aus Polyethylen, wobei die Spitze aus einem härteren Material gefertigt sein kann.

Nachstehend wird ein Ausführungsbeispiel nebst einiger Varianten anhand der beiliegenden Zeichnung beschrieben.
Fig. 1 ist eine Schnittdarstellung einer Ausführungsform der erfindungsgemässen Vorrichtung, die zur Befestigung einer Folie auf einem Isoliermaterial dient, die
Fig. 2 bis 7 veranschaulichen verschiedene Kopfausbildungen und
Fig. 8 ist ein stark vereinfachter Schnitt durch eine zur Herstellung der Vorrichtung dienende Form.

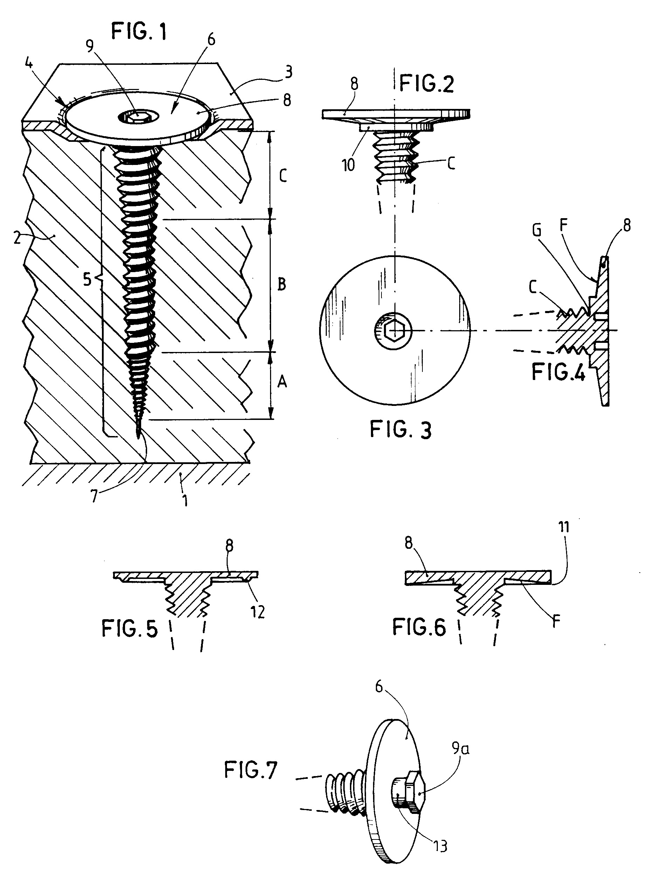

Fig. 1 zeigt in vereinfachter Form einen Ausschnitt aus einem wärme- und feuchtigkeitsisolierten Dach. Auf einer beispielsweise aus Beton erstellten Decke 1 befindet sich ein wärmeisolierendes Material 2, beispielsweise Polyurethan-Hartschaum, das nach aussen durch eine Kunststoffolie 3 gegen das Eindringen von Feuchtigkeit geschützt ist. Zur Befestigung der Folie 3 auf dem Material 2 dient eine insgesamt mit 4 bezeichnete Vorrichtung, an welcher sich zunächst ein Grundkörper 5 und ein Kopf 6 unterscheiden lassen. Der Grundkörper 5 weist ein Aussengewinde auf, das vorzugsweise als Spitzgewinde ausgebildet und in drei Abschnitte, das heisst einen Vorformabschnitt A, einen Anpressabschnitt C und einen zwischen beiden liegenden Mittelabschnitt B unterteilt ist. Am unteren Ende des Grundkörpers 5 befindet sich eine Spitze 7, die entweder einteilig am Grundkörper 5 angeformt oder angesetzt sein kann. Vorzugsweise ist die Spitze 7, die selbst kein Gewinde trägt, aus einem härteren Material als der übrige Teil des Grundkörpers 5, z.B. gehärtetem Stahl.

Der Kopf 6 hat eine dreifache Funktion auszuüben:
Erstens dient er als Anschlag beim Einschrauben der Vorrichtung und ist demgemäss in Form eines Anschlagbundes 8 ausgebildet.
Zweitens Soll er das Einschrauben der Vorrichtung mittels eines Werkzeugs, beispielsweise eines Schraubenschlüssels, gestatten und besitzt zu diesem Zwecke einen Sechskant-Ansatz 9. Und schliesslich soll der Anschlagbund 8 noch die Wasserdichtheit des beim Einschrauben in der Folie 3 entstandenen Loches gewährleisten.

Die drei Abschnitte A, B und C des Grundkörpers 5 haben beim Einschrauben gänzlich unterschiedliche Funktionen: Nachdem die Spitze 7 unter leichtem axialem Druck die Folie 3 durchstochen hat und in das Material 2 eingedrungen ist, fasst das Gewinde des Vorformabschnitts A und kann nun durch Drehen am Kopf 6 weiter ins Material eingeschraubt werden. Dabei verdrängt der konische Abschnitt A das weiche Material, indem er es in seinem Grenzbereich komprimiert, bis dessen oberste, grösste Windung ins Material eingedrungen ist. Der Mittelabschnitt B, welcher nun ins Material eindringt, ist zylindrisch ausgebildet, so dass bei dessen Vordringen in seinem Bereich kein zusätzliches Verdrängen bzw. Komprimieren mehr stattfindet, das Einschrauben somit mit relativ geringer Kraftanwendung fortgesetzt werden kann. Sobald dann allerdings der wiederum konisch ausgebildete Anpressabschnitt C mit seiner untersten Windung das Material 2 erfasst hat, ergibt sich eine weitere Zunahme der Verdrängungsphase. Durch das Eindrehen des Anpressabschnitts C wird die Folie 3 fest gegen das darunterbefindliche Material 2 gepresst und damit das Eindringen von Wasser verhindert.

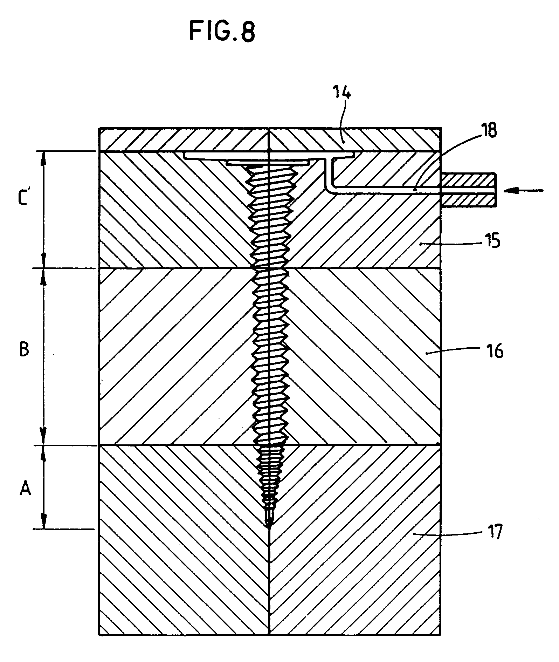

Um die Dichtwirkung des Kopfes 6 noch zu verbessern, kann derselbe nach Fig. 2 einen angeformten Kragen 10 aufweisen, der beidseits über das Gewinde hinausragt und sich in der letzten Einschraubphase fest gegen die Folie 3 anlegt. Die dem Anpressabschnitt C zugewandte Innenfläche F des Anschlagbundes 8 kann nach Fig. 4 konisch ausgebildet sein; auch kann sich der Anschlagbund 8 gemäss Fig. 6 nach aussen verdicken und in eine Dichtkante 11 auslaufen.

Gemäss Fig. 5 ist an der Unterseite des Anschlagbundes 8 ein ringförmiger Dichtwulst 12 angeformt.

Es hat sich ferner gezeigt, dass die dichtende Anpressung der Folie 3 dadurch noch verbessert werden kann, wenn die Gewindetiefe in dem dem Anschlagbund 8 benachbarten obersten Gewindegang G (Fig. 4) etwas geringer ist, als in den daran angrenzenden Gewindegängen.

Der Grundkörper 5 wird vorzugsweise einschliesslich des Kopfes 6 aus Polyethylen einteilig geformt, die Spitze 7 entweder mitgeformt oder nachträglich in Form einer Stahlspitze eingesetzt.

Die Konizität der beiden konischen Abschnitte A und C kann gleich sein, doch wird der Kegelwinkel des Anpressabschnitts C vorzugsweise etwas grösser gewählt als derjenige des Vorformabschnitts A. Kegelwinkel zwischen 5 und 15° zeigen die besten Ergebnisse.

Der zum Ansetzen des Einschraubwerkzeugs dienende Ansatz 9 am Kopf 6 kann in unterschiedlicher Form ausgebildet sein, beispielsweise versenkt wie in Fig. 1 oder herausragend wie bei 9a in Fig. 7. Letztere Form kann bei horizontalem Einschrauben in Wandverkleidungen von Vorteil sein, da die Nut 13 zur Befestigung bzw. zum Einhängen weiteres Utensilien dienen kann.

Der Mittelabschnitt B des Grundkörpers ist in erster Linie deshalb zylindrisch ausgebildet, um bei grosser Dicke des Materials 2 das Einschrauben während der mittleren Einschraubphase zu erleichtern. Aus diesem Grunde sollte der Aussendurchmesser dieses zylindrischen Gewindeabschnittes höchstens gleich dem Aussendurchmesser des grössten Gewindeganges am Vorformabschnitt A sein. Um nun die Vorrichtung den unterschiedlichen Materialdicken anpassen zu können, kann der mittlere Gewindeabschnitt B je nach Bedarf unterschiedlich lang ausgebildet sein. Die hierzu erforderliche Spritzform ist in vereinfachter Schnittdarstellung in Fig. 8 gezeigt. Sie weist demgemäss beispielsweise vier Formteile 14, 15, 16 und 17 auf, die jeweils wieder aus zwei Hälften bestehen. Der Materialzufluss erfolgt über eine Bohrung 18 in der Kopf zu formenden Vorrichtung.

Sämtliche Formteile 14 bis 17 werden in einer Aufnahmebohrung der Maschine so angeordnet, dass sich die zur Formung des Mittelabschnitts B dienenden Formhälften 16 ersetzen lassen und so unterschiedliche Längen des Mittelabschnitts B realisierbar sind. Die Befestigung der Formteile 14 bis 17 innerhalb der Maschine kann vom Fachmann mit konventionellen Mitteln erfolgen und wird daher nicht beschrieben.

## Patentansprüche

1. Vorrichtung zur lösbaren Befestigung eines Bauteils (3) an einem Material geringer Eigenfestigkeit (2), mit einem ein Aussengewinde tragenden Grundkörper (5), der eine gewindefreie Spitze (7) aufweist, mindestens auf einem Teil seiner Gesamtlänge konisch ausgebildet ist und ferner an seinem der Spitze (7) gegenüberliegenden Endabschnitt einen Anschlagbund (8) sowie an dessen Aussenseite ein Betätigungsorgan (9) zum Ansetzen eines Werkzeugs aufweist, dadurch gekennzeichnet, dass der Grundkörper (5) einen der gewindefreien Spitze benachbarten konischen Vorformabschnitt (A), einen dem genannten Anschlagbund (8) benachbarten konischen Anpressabschnitt (C) und zwischen diesen beiden einen zylindrischen Mittelabschnitt (B) aufweist und alle drei Anschnitte (A, B, C) des Grundkörpers (5) mit einem Gewinde versehen sind, derart, dass beim Eindrehen der Vorrichtung in das genannte Material der zylindrische Mittelabschnitt (B) keine radiale Materialverdrängung bewirkt.

2. Vorrichtung nach Anspruch 1, dadurch gekennzeichnet, dass der Anpressabschnitt (C) einen grösseren Kegelwinkel aufweist als der Vorformabschnit (A).

3. Vorrichtung nach einem der Ansprüche 1 oder 2, dadurch gekennzeichnet, dass der Gewinde-Aussendurchmesser des zylindrischen Mittelabschnitts (B) gleich oder kleiner ist als der grösste Gewinde-Aussendurchmesser des Vorformabschnitts (A).

4. Vorrichtung nach einem der Ansprüche 1 bis 3, dadurch gekennzeichnet, dass die gesamte Vorrichtung aus einem verschleissfesten Kunststoff, beispielsweise Polyethylen, besteht.

5. Vorrichtung nach einem der Ansprüche 1 bis 3, dadurch gekennzeichnet, dass die gewindefreie Spitze (7) aus einem härteren Material gefertigt ist, als der übrige Teil des Grundkörpers (5).

6. Vorrichtung nach einem der Ansprüche 1 bis 5, dadurch gekennzeichnet, dass zwischen Anschlagbund (8) und Anpressabschnitt (C) ein ringförmiger Dichtungskragen (10) angeformt ist.

7. Vorrichtung nach einem der Ansprüche 1 bis 6, dadurch gekennzeichnet, dass die dem Anpressabschnitt (C zugewandte Innenfläche (F) des Anschlagbundes (8) geneigt ist, derart, dass der Anschlagbund (8) entweder an seiner Randpartie oder in seinem Mittelbereich eine geringere Dicke aufweist.

8. Vorrichtung nach einem der Ansprüche 1 bis 7, dadurch gekennzeichnet, dass der Anschlagbund (8) an seiner dem Anpressabschnitt (C) zugewandten Innenfläche (F) einen dichtenden Ringwulst (12) aufweist.

9. Verfahren zur Herstellung der Vorrichtung nach einem der Ansprüche 1 bis 8 in einer Form, dadurch gekennzeichnet, dass diese Form für die Herstellung des zylindrischen Mittelabschnitts einen auswechselbaren Formteil aufweist, so dass der Mittelabschnitt je nach Bedarf unterschiedlich lang ausgebildet werden kann.

10. Anwendung der Vorrichtung nach einem der Ansprüche 1 bis 8 zur Befestigung einer wasserundurchlässigen Kunststoffolie auf der beispielsweise aus Polyurethan-Hartschaum bestehenden Isolierschicht einer Dachkonstruktion.

## Claims

1. Device for the releasable fixing of a component (3) on a material of low inherent strength (2), with a main body (5) which bears an external thread and has an unthreaded tip (7), is of tapered design at least over part of its total length and, furthermore, has a stop collar (8) on its end section opposite the tip (7) and, on the outer side of the said stop collar, an actuating element (9) for the application of a tool, characterized in that the main body (5) has a tapered preforming section (A) adjacent to the unthreaded tip, a tapered press-on section (C) adjacent to the said stop collar (8) and, between these two sections, a cylindrical central section (B), and all three sections (A, B, C) of the main body (5) are provided with a thread, such that, as the device is screwed into the said material, the cylindrical central section (B) does not cause any radial displacement of the material.

2. Device according to Claim 1, characterized in that the press-on section (C) has a larger angle of taper than the preforming section (A).

3. Device according to either of Claims 1 or 2, characterized in that the external diameter of the thread of the cylindrical central section (B) is equal to or smaller than the maximum external diameter of the thread of the preforming section (A).

4. Device according to one of Claims 1 to 3, characterized in that the entire device is composed of a wear-resistant plastic, for example polyethylene.

5. Device according to one of Claims 1 to 3, characterized in that the unthreaded tip (7) is manufactured from a harder material than the remaining part of the main body (5).

6. Device according to one of Claims 1 to 5, characterized in that an annular sealing collar (10) is formed integrally between the stop collar (8) and the press-on section (C).

7. Device according to one of Claims 1 to 6, characterized in that the inner surface (F) of the stop collar (8), the surface facing the press-on section (C), slopes such that the stop collar (8) has a reduced thickness either at its rim or in its central area.

8. Device according to one of Claims 1 to 7, characterized in that the stop collar (8) has an annular sealing bead (12) on its inner surface (F), the surface facing the press-on section (C).

9. Method for the production of the device according to one of Claims 1 to 8 in a mould, characterized in that this mould has a replaceable part for the production of the cylindrical central section and it is thus possible to vary the length of the central section according to requirements.

10. Use of the device according to Claims 1 to 8 for fixing a waterproof plastic sheet on the insulating layer of a roof structure, the said insulating layer being composed, for example, of rigid polyurethane foam.

## Revendications

1. Dispositif de fixation amovible d'une pièce (3) sur un matériau (2) de moindre résistance mécanique, comprenant un corps de base (5) qui porte un filetage extérieur, lequel corps de base comporte une pointe non filetée (7), présente une forme conique au moins sur une partie de sa longueur totale, et comporte en outre une collerette de butée (8) à sa partie d'extrémité opposée à la pointe (7), et, sur la face extérieure de celle-ci, un organe d'actionnement (9) pour la mise en prise d'un outil, caractérisé en ce que le corps de base (5) comprend une partie de pré-compression (A) voisine de la pointe non filetée, une partie de serrage conique (C) voisine de ladite collerette de butée (8), et, entre ces deux parties, une partie intermédiaire cylindrique (B), les trois parties (A, B, C) du corps de base (5) étant filetées de façon que, lorsque l'on visse le dispositif dans ledit matériau, la partie intermédiaire cylindrique (B) ne provoque aucun refoulement radial du matériau.

2. Dispositif suivant la revendication 1, caractérisé en ce que la partie de serrage (C) présente un angle de conicité supérieur à celui de la partie de pré-compression (A).

3. Dispositif suivant l'une des revendications 1 ou 2, caractérisé en ce que le diamètre extérieur de filet de la partie intermédiaire cylindrique (B) est égal ou inférieur au plus grand diamètre extérieur de filet de la partie de pré-compression (A).

4. Dispositif suivant l'une des revendications 1 à 3, caractérisé en ce que l'ensemble du dispositif est constitué d'une matière plastique résistante à l'usure, par exemple en polyéthylène.

5. Dispositif suivant l'une des revendications 1 à 3, caractérisé en ce que la pointe non filetée (7) est réalisée en un matériau plus dur que le reste du corps de base (5).

6. Dispositif suivant l'une des revendications 1 à 5, caractérisé en ce qu'entre la collerette de butée (8) et la partie de serrage (C) est formé un collet annulaire d'étanchéité (10).

7. Dispositif suivant l'une des revendications 1 à 6, caractérisé en ce que la surface intérieure (F) de la collerette de butée (8) tournée vers la partie de serrage (C) est inclinée de façon que la collerette de butée (8) présente une épaisseur réduite soit à sa partie marginale, soit dans sa région centrale.

8. Dispositif suivant l'une des revendications 1 à 7, caractérisé en ce que la collerette de butée (8) comporte un bourrelet annulaire d'étanchéité (12) sur sa surface intérieure (F) tournée vers la partie de serrage (C).

9. Procédé de fabrication du dispositif suivant l'une des revendications 1 à 8 dans un moule, caractérisé en ce que ce moule comporte, pour la réalisation de la partie intermédiaire cylindrique, une partie de moule interchangeable, de sorte que, suivant le besoin, la partie intermédiaire peut être réalisée avec une longueur différente.

10. Utilisation du dispositif suivant l'une des revendications 1 à 8 pour la fixation d'une feuille de matière plastique imperméable à l'eau sur la couche d'isolation, constituée par exemple de mousse dure de polyuréthanne, d'une structure de toit.
